# EUROPEAN PATENT APPLICATION

(11) **EP 2 873 516 A1**
(43) Date of publication of application: **20.05.2015**
(21) Application number: 13193464.8
(22) Date of filing: 19.11.2013
(51) Int. Cl.: B29C 70/34

(54) **Method and arrangement for manufacturing a composite material component**

(71) Applicant: Airbus Operations GmbH, 21129 Hamburg (DE)
(72) Inventor: Raeckers, Bernd, 21129 Hamburg (DE)
(74) Representative: Schicker, Silvia

(57) **Abstract**

In a method for manufacturing a composite material component (12), a semi-finished part (16) is placed on a tool (14). A sprayable material is sprayed onto the tool (14) and the semi-finished part (16) by means of a spraying device (26) so as to generate a vacuum bag (34) from the sprayable material which is configured to seal a receiving space (36) for receiving at least the semi-finished part (16) against the ambient atmosphere.

## Description

The invention relates to a method and an arrangement for manufacturing a composite material component, in particular a composite material aircraft component.

In aircraft construction, efforts are being made to use as load-bearing components increasingly components which are composed wholly or partly of fibre-reinforced composite materials, for example carbon fibre-reinforced plastics (CFRP). For producing aircraft components from fibre-reinforced composite materials, fibre prepregs containing reinforcing fibres impregnated with a thermoset plastic material may be arranged inside a mould or placed onto a mould and thereafter may be sealed by means of a vacuum foil. In the following, the thermoset plastic material may be cured under an elevated pressure and/or an elevated temperature so that a composite material with a matrix made of cured thermoset plastic material and reinforcing fibres embedded in the matrix is obtained. In order to exhibit the thermoset plastic material to the desired elevated pressure and/or elevated temperature, the mould with the fibre prepregs may be placed within an autoclave.

DE 10 2005 026 010 B4 and US 7,897,095 B2 relate to a method for manufacturing a shell, in particular a fuselage shell, a wing shell, a horizontal stabilizer shell or a vertical stabilizer shell, that is reinforced with a plurality of stiffening elements, for forming aircraft component parts with high dimensional stability. The stiffening elements and a shell skin are made with epoxy resin from at least partially cured carbon fibre reinforced semi-finished parts. The stiffening elements are positioned on the shell skin, wherein connecting elements are positioned so as to abut against the shell skin and the stiffening elements. Finally, the connecting elements are cured in a vacuum bag in an autoclave together with the shell skin and the stiffening elements.

The invention is directed at the object of specifying a method and an arrangement which allow a high quality composite material component, in particular a high quality composite material aircraft component, to be manufactured in a simplified and efficient manner.

These objects are achieved by a method having the features of Claim 1 and an arrangement having the features of Claim 8.

In a method for manufacturing a composite material component, a semi-finished part is placed on a tool. The semi-finished part may comprise only one element or may comprise a plurality of elements which are intended to be connected to each other so as to form the composite material component. The semi-finished part may comprise reinforcing fibres in the form of single fibres, fibre prewovens or fibre prepregs. Further, the semi-finished part may contain a thermoset plastic material, for example a resin material. In case the semi-finished part comprises a plurality of elements which are intended to be connected to each other, it is conceivable that some of the elements contain an already cured thermoset plastic material. Preferably, the composite material component is made from the semi-finished part by curing a thermoset plastic material contained in at least one element of the semi-finished part.

The tool may be any suitable tool which is configured to receive the semi-finished part. For example, the tool may be designed in the form of a supporting tool having a supporting surface configured to receive the semi-finished part on top thereof, in particular in case the semi-finished part comprises a fibre prepreg having a shape which, apart from shrinkage during curing of the thermoset plastic material, more or less corresponds to the shape of the composite material component made from the semi-finished part. A shape of the supporting surface of the tool may, at least in sections, correspond to a shape of a surface of the semi-finished part resting on the supporting surface when the semi-finished part is supported on the tool. It is, however, also conceivable that the tool is designed in the form of a mould wherein enforcing fibres and/or a thermoset plastic material may be introduced.

In the method for manufacturing a composite material component, a sprayable material is sprayed onto the tool and the semi-finished part by means of a spraying device so as to generate a vacuum bag from the sprayable material which is configured to seal a receiving space for receiving at least the semi-finished part against the ambient atmosphere. The sprayable material is a material which is suitable to generate an airtight bagging adapted to seal the receiving space receiving at least the semi-finished part against the ambient atmosphere. Preferably, the sprayable material is sprayed onto the tool and the semi-finished part in the liquid state and thereafter is transferred to the solid state so as to generate the vacuum bag. The spraying device preferably comprises a spraying nozzle allowing the sprayable material to be uniformly distributed onto the tool and the semi-finished part.

Generating the vacuum bag which serves to seal the receiving space by spraying a sprayable material onto the tool and the semi-finished part dispenses with the need to drape a vacuum foil for sealing the semi-finished part received within the receiving space against the ambient atmosphere. Further, sealing of the vacuum foil using sealant tape is no longer necessary. Consequently, the process of manufacturing the composite material component can be significantly simplified allowing time and cost savings to be achieved. Further, a vacuum bag made of a sprayable material closely abuts against and snugly fits to an outer surface of the semi-finished part without wrinkles such that a high quality composite material component can be obtained, even in case the composite material component is made of a semi-finished part having a complex shape. Finally, if necessary, damages in the vacuum bag can easily be repaired by simply spraying an additional layer of sprayable material onto a damaged section of the vacuum bag.

After generating the vacuum bag from the sprayable material, the receiving space may be connected to a vacuum source configured to generate a reduced pressure within the receiving space. The vacuum source, for example, may be provided in the form of a pump which is suitable to draw gas from the receiving space and to generate a pressure within the receiving space which is lower than the ambient pressure of the ambient atmosphere surrounding the receiving space. The composite material component may be made from the semi-finished part by curing a thermoset plastic material which is already contained in the semi-finished part when the semi-finished part is sealed within the receiving space by means of the vacuum bag generated from the sprayable material. It is, however, also conceivable that a thermoset plastic material is injected into the receiving space after sealing the receiving space by means of the vacuum bag. The curing of the thermoset plastic material may be achieved under an elevated pressure and/or under an elevated temperature, for example within an autoclave. In case the pressure within the receiving space is lower than the ambient pressure of the ambient atmosphere surrounding the receiving space, trapped air may easily be removed either upon curing the thermoset plastic material contained in the semi-finished part or upon introducing a liquid thermoset plastic material into the tool.

The sprayable material used to generate the vacuum bag may be a polymer material which, after being sprayed onto the tool and the semi-finished part by means of the spraying device, may be dried or cured. In case the vacuum bag should be generated by simply drying the sprayable material, the sprayable material may be a single component polymer material which, after being sprayed onto the tool and the semi-finished part does not experience changes in its chemical structure. It is, however, also conceivable to use a curable polymer material to generate the vacuum bag which, after being sprayed onto the tool and the semi-finished part, experiences a curing reaction changing its chemical structure. If desired or necessary, after being sprayed onto the tool and the semi-finished part, the sprayable material may be exposed to an elevated temperature and/or an elevated pressure in order to promote or initiate drying or curing of the material.

For example, the sprayable material may be a polymer material which is suitable to cure upon being exposed to ambient air and/or humidity contained in the ambient air. Furthermore, it is conceivable to use a multicomponent material, in particular a multicomponent polymer material as the sprayable material. Upon spraying the sprayable material onto the tool and the semi-finished part, the multiple components of the material then can be brought into contact with each other initiating a curing reaction. A vacuum bag made of a curable material distinguishes by excellent mechanical properties, in particular a high strength while still being flexible enough to allow the vacuum bag to be released from the tool and the semi-finished part after completion of the process of manufacturing the composite material component.

Preferably, the sprayable material, after being dried or cured, is air tight up to a temperature of approximately 200°C and up to a pressure of approximately 12 bar. A vacuum bag made of the sprayable material then is suitable for sealing a semi-finished part which, for manufacturing the composite material component from the semi-finished part, is exhibited to an autoclave process. For example, thermoplastic co-polymers or polyurethanes may be used as the sprayable material for generating the vacuum bag.

The sprayable material may be sprayed onto the tool and the semi-finished part by means of the spraying device so as to generate a vacuum bag which defines a receiving space enveloping the tool and the semi-finished part. In other words, the sprayable material may be sprayed onto the tool and the semi-finished part in such a manner that the vacuum bag generated from the sprayable material entirely surrounds the tool and the semi-finished part. In order to achieve this, during spraying the sprayable material onto the tool and the semi-finished part, the spraying device may be moved relative to the tool and the semi-finished part and/or the tool and the semi-finished part may be moved relative to the spraying device. Alternatively thereto, the sprayable material may be sprayed onto the tool and the semi-finished part by means of the spraying device so as to generate a vacuum bag which, together with the tool, in particular a supporting surface of the tool, defines the receiving space. For example, the sprayable material may be sprayed onto a semi-finished part supported on a supporting surface of a tool and the supporting surface of the tool so as to cover the semi-finished part as well as a region of the supporting surface of tool adjacent to the semi-finished part. The receiving space then is defined by the supporting surface of the tool and the vacuum bag covering the semi-finished part and the adjacent region of the supporting surface of the tool.

Preferably, the sprayable material is sprayed onto the tool and the semi-finished part by means of the spraying device so as to generate a vacuum bag which is connected to the tool, in particular the supporting surface of the tool, in a sealing manner. The use of a sprayable material which, upon drying or curing, us suitable to form a sealing connection with the tool, in particular the supporting surface of the tool, dispenses with the need to provide additional sealing elements for sealing the vacuum bag to the tool. If desired of necessary, it is, however, also conceivable to connect the vacuum bag to the tool, in particular the supporting surface of the tool, in a sealing manner using additional sealing means, e.g. a sealing tape.
The sprayable material may be sprayed onto the tool and the semi-finished part by means of the spraying device so as to generate a vacuum bag having a uniform thickness across its surface. For example, the thickness of the vacuum bag generated from the sprayable material may be adjusted as desired and may vary between, for example, 0.1 mm to 1-2 mm. A uniform thickness of the vacuum bag may be obtained by uniformly applying the sprayable material onto the tool and the semi-finished part by means of the spraying device. In particular, the spraying device may be moved across a surface of the tool and the semi-finished part with a uniform speed and/or the tool and the semi-finished part may be moved relative to the spraying device with a uniform speed so as to generate a vacuum bag having a uniform thickness across its surface.

Alternatively or additionally thereto, the sprayable material may be sprayed onto the tool and the semi-finished part by means of the spraying device so as to generate a vacuum bag having a varying thickness across its surface. For example, in order to increase the thickness of the vacuum bag generated from the sprayable material, the speed of a relative movement between the tool and the semi-finished part on the one hand and the spraying device on the other hand may be varied. In particular, the sprayable material may be sprayed onto the tool and the semi-finished part so as to generate a vacuum bag having an increased thickness in critical regions as compared to non-critical regions. Critical regions may, for example, be edge regions of the semi-finished part or regions which are intended to be perforated, for example to connect a vacuum source or a thermoset polymer material source to the receiving space.

Prior to spraying the sprayable material onto the tool and the semi-finished part by means of the spraying device, at least the semi-finished part and, if needed, also at least a part of the tool, may be covered by at least one of a peel ply, a perforated release foil and a gating fabric tape. The peel ply, the perforated release foil and the gating fabric tape may be permeable to both air and liquid thermoset plastic material which may be introduced into the receiving space after sealing the receiving space by means of the vacuum bag made of a sprayable material. The peel ply and the perforated release foil simplify releasing the vacuum bag made of the sprayable material from the composite material component after completion of the manufacturing process. The gating fabric tape serves as a venting means which is flown through with air to be removed from the receiving space, for example, during curing of thermoset plastic material contained within the semi-finished part. The peel ply, the perforated release foil and the gating fabric tape may be a conventional peel ply, a perforated release foil and a gating fabric tape. It is, however, also conceivable to use also a sprayable material for generating at least one of the peel ply, the perforated release foil and the gating fabric tape.

At least one of the semi-finished part and the tool may be supported in its position, for example, within an autoclave, by means of a retaining means arranged outside of the vacuum bag generated from the sprayable material. Since the vacuum bag generated from the sprayable material very closely folllows the contours of the semi-finished part and the tool, the retaining means may be positioned as desired, wherein it is not necessary to arrange the retaining means within the vacuum bag.

An arrangement for manufacturing a composite material component comprises a tool adapted to receive a semi-finished part and a spraying device adapted to spray a sprayable material onto the tool and the semi-finished part so as to generate a vacuum bag from the sprayable material which is configured to seal a receiving space for receiving at least the semi-finished part against the ambient atmosphere.

Preferably, the sprayable material is a polymer material which is adapted to be dried or cured after being sprayed onto the tool and the semi-finished part by means of the spraying device.

The sprayable material, after being dried or cured, preferably is air tight up to a temperature of approximately 200°C and up to a pressure of approximately 12 bar.

The spraying device may be adapted to spray the sprayable material onto the tool and the semi-finished part so as to generate a vacuum bag which defines a receiving space enveloping the tool and the semi-finished part. Additionally or alternatively thereto, the spraying device may be adapted to spray the sprayable material onto the tool and the semi-finished part so as to generate a vacuum bag which, together with the tool, in particular a supporting surface of the tool, defines the receiving space, and which is connected to the tool, in particular the supporting surface of the tool, in a sealing manner.

The spraying device may be adapted to spray the sprayable material onto the tool and the semi-finished part so as to generate a vacuum bag having a uniform thickness across its surface. Additionally or alternatively thereto, the spraying device may be adapted to spray the sprayable material onto the tool and the semi-finished part so as to generate a vacuum bag having a varying thickness across its surface.

The arrangement may further comprise at least one of a peel ply, a perforated release foil and a gating fabric tape which are adapted to cover at least the semi-finished part prior to spraying the sprayable material onto the tool and the semi-finished part by means of the spraying device.

Further, the arrangement may comprise a retaining means adapted to support at least one of the semi-finished part and a tool in its position, wherein the retaining means is arranged outside of the vacuum bag generated from the sprayable material.

A method described above and/or an arrangement described above may be used in particularly favorable manner for producing a composite material aircraft component.

A preferred embodiment of the invention now is described in greater detail with reference to the appended schematic drawings, wherein
- Figure 1: shows an arrangement for producing a composite material component,
- Figure 2: shows a semi-finished part received within a receiving space sealed against the ambient atmosphere by a vacuum bag made of a sprayable material, and
- Figure 3: shows a composite material component made of the semi-finished part.

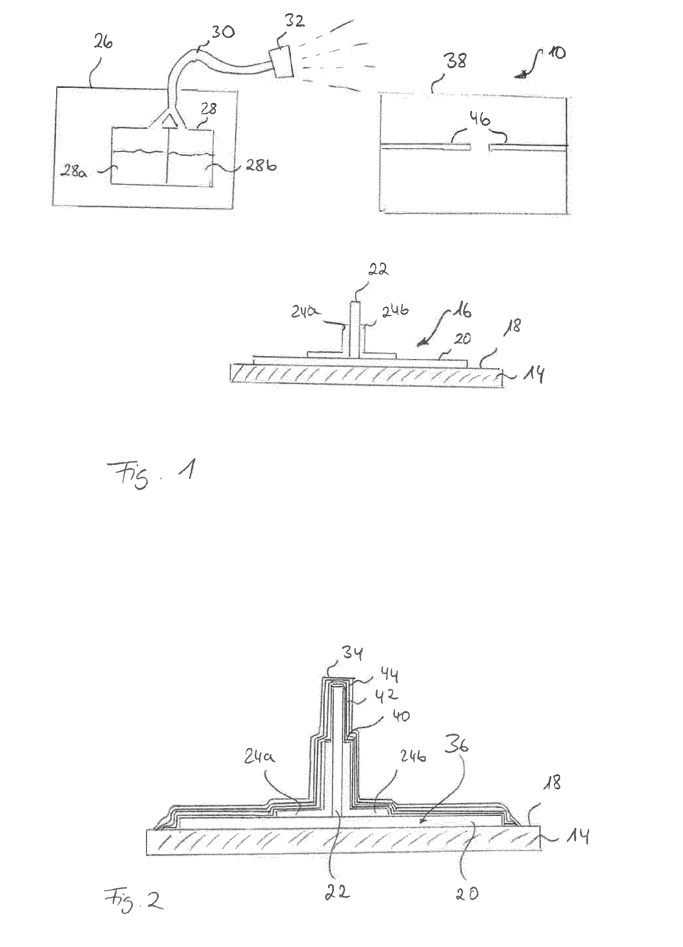

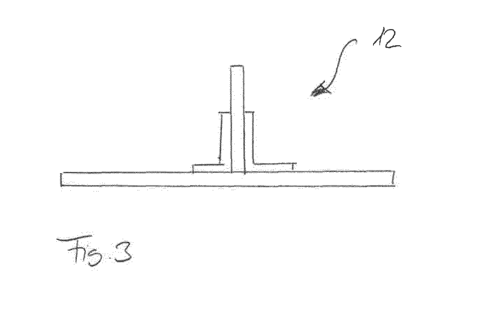

Figure 1 shows an arrangement 10 for manufacturing a composite material component 12, the composite material component 12 being depicted in Figure 3. The arrangement 10 comprises a tool 14 which is adapted to receive a semi-finished part 16. In the embodiment of an arrangement 10 according to Figure 1, the tool 14 is designed in the form of a supporting tool having a supporting surface 18 adapted to support the semi-finished part 16 thereon. The shape of the supporting surface 18 of the tool 14 is adapted to the shape of a surface of the semi-finished part 16 facing the supporting surface 18 of the tool 14. In the schematic drawing of Figure 1, the supporting surface 18 of the tool 14 is a planar surface. It is, however, also conceivable to provide the tool 14 with a curved supporting surface 18, in particular in case a composite material component 12 having a curved surface should be produced.

The semi-finished part 16 comprises a first element 20 which is adapted to form an aircraft outer shell. A second element 22 of the semi-finished part 16 extends substantially perpendicular to the first element 20 and is adapted to form a stiffening element enhancing the mechanical properties of an aircraft outer shell. Finally, the semi-finished part 16 comprises two third elements 24a, 24b which are adapted to form connecting elements connecting a stiffening element to an aircraft outer shell.

In the exemplary embodiment of a semi-finished part 16 described herein, the first element 20, the second element 22 and the third elements 24a, 24b of the semi-finished part 16 are made of fiber prepregs, i.e. pre-formed fibers, in particular carbon fibers which are impregnated with a thermoset plastic material, in particular a resin material such as, for example, an epoxy resin material. It is, however, also conceivable to use a first element 20 and a second element 22 which contain an already cured thermoset plastic material such that only the third elements 24a, 24b of the semi-finished part 16 have to undergo a curing process.

The arrangement further comprises a spraying device 26 which is adapted to spray a sprayable material onto the tool 14 and the semi-finished part 16. The spraying device 26 is designed in the form of a movable device such that the spraying device 26 can be moved relative to the tool 14 and the semi-finished part 16 as desired during spraying a sprayable material onto the tool 14 and the semi-finished part 16. It is, however, also conceivable to design the spraying device 26 in the form of a fixed device and to provide for a movable support which allows moving the tool 14 and the semi-finished part 16 relative to the spraying device 26.

The spraying device 26 contains a storage space 28 which is filled with the sprayable material. In particular, the storage space 28 is sub-divided into a first compartment 28a and a second compartment 28b allowing a two-component sprayable material to be received within the storage space 28 in such a manner that contact between the two components of the sprayable material received within the first and the second compartment 28a, 28b of the storage space 28 is reliably prevented. The storage space 28, via a supply line 30, is connected to a spraying nozzle 32. The spraying nozzle 32 provides for a uniform distribution of the sprayable material, wherein the supply line 30 is made of a flexible material allowing the spraying nozzle 32 to be conveniently moved as desired.

The sprayable material contained in the storage space 28 of the spraying device 26 is a polymer material which, after being sprayed onto the tool 14 and the semi-finished part 16 by means of the spraying device 26 generates a vacuum bag 34, the vacuum bag 34 being configured to seal a receiving space 36 for receiving the semi-finished part 16 against the ambient atmosphere, see Figure 2. In the exemplary embodiment discussed herein, the receiving space 36 is defined by the vacuum bag 34 covering the semi-finished part 16 and the supporting surface 18 of the tool 14. The vacuum bag 34 is connected to the tool 14, i.e. the supporting surface 18 of the fool 14 in a sealing manner. The sealing connection between the vacuum bag 34 and the supporting surface 18 of the tool 14 is achieved upon spraying the sprayable material used for generating the vacuum bag 34 onto the semi-finished part 16 and the tool 14. It is, however, also conceivable to use an additional sealing element, for example in the form of a sealing tape to sealingly connect the vacuum bag 34 to the supporting surface 18 of the tool 14. Further, it is conceivable to spray the sprayable material onto the tool 14 and the semi-finished part 16 in such a manner that a vacuum bag 34 is generated which defines a receiving space 36 enveloping the tool 14 and the semi-finished part 16.

The sprayable material which, in the exemplary embodiment discussed herein, is a two-component material, is cured by a chemical reaction initiated by bringing the two components of the sprayable material received within the first and the second compartment 28a, 28b of the storage space 28 of the spraying device 26 into contact with each other upon spraying the sprayable material onto the tool 14 and the semi-finished part 16. After being cured, the sprayable material forms a vacuum bag 34 which is air tight up to a temperature of approximately 200°C and up to a pressure of approximately 12 bar. The tool 14 and the semi-finished part 16 which is received within the receiving space 36 defined by the vacuum bag 34 and the supporting surface 18 of the tool 14 thus may be placed within an autoclave 38, wherein the thermoset plastic material contained within the semi-finished part 16 is cured under an elevated temperature and an elevated pressure in order to obtain the composite material component 12 depicted in Figure 3.

As becomes apparent from Figure 2, prior to spraying the sprayable material onto the tool 14 and the semi-finished part 16, the semi-finished part 16 and a region of the supporting surface 18 of the tool 14 adjacent to the semi-finished part 16 is covered by a peel ply 40, a perforated release foil 42 and a gating fabric tape 44. While the peal ply 40 and the perforated release foil 42 simplify releasing the vacuum bag 34 from the tool 14 and the composite material component 12 after completion of the autoclave process, the gating fabric tape 44 allows air to be removed from the receiving space 36 when the receiving space 36 is connected to a vacuum source (not shown in the drawings).

In most regions of the semi-finished part 16, the vacuum bag 34 generated from the sprayable material has a uniform thickness. In edge regions of the semi-finished part 16 or other critical regions, the vacuum bag 34, however, may have a larger thickness thus increasing the strength of the vacuum bag 34 in these critical regions. Thus, damages to the vacuum bag 34, for example during the autoclave process, can be reliably prevented. However, in case the vacuum bag 34 is nevertheless damaged, it can easily by repaired by simply spraying additional sprayable material onto a damaged section of the vacuum bag 34. The vacuum bag 34, due to being made from a sprayable material, exactly fits to the contour of the semi-finished part 16 and the supporting surface 18 of the tool 14. Hence, the semi-finished part 16, within the autoclave 38, can be supported in its position by means of a retaining means 46 which is arranged outside of the vacuum bag 34.

## Claims

1. A method for manufacturing a composite material component (12), the method comprising:
- placing a semi-finished part (16) on a tool (14), and
- spraying a sprayable material onto the tool (14) and the semi-finished part (16) by means of a spraying device (26) so as to generate a vacuum bag (34) from the sprayable material which is configured to seal a receiving space (36) for receiving at least the semi-finished part (16) against the ambient atmosphere.

2. The method according to Claim 1,
wherein the sprayable material is a polymer material which, after being sprayed onto the tool (14) and the semi-finished part (16) by means of the spraying device (26), is dried or cured.

3. The method according to Claim 2,
wherein the sprayable material, after being dried or cured, is airtight up to a temperature of approximately 200°C and up to a pressure of approximately 12 bar.

4. The method according to any one of Claims 1 to 3,
wherein the sprayable material is sprayed onto the tool (14) and the semi-finished part (16) by means of the spraying device (26) so as to generate a vacuum bag () which defines a receiving space (36) enveloping the tool (14) and the semi-finished part (16) and/or wherein the sprayable material is sprayed onto the tool (14) and the semi-finished part (16) by means of the spraying device (26) so as to generate a vacuum bag (34) which, together with the tool (14), in particular a supporting surface (18) of the tool (14), defines the receiving space (36), and which is connected to the tool (14), in particular the supporting surface (18) of the tool (14), in a sealing manner.

5. The method according to any one of Claims 1 to 4,
wherein the sprayable material is sprayed onto the tool (14) and the semi-finished part (16) by means of the spraying device (26) so as to generate a vacuum bag (34) having a uniform thickness across its surface, and/or wherein the sprayable material is sprayed onto the tool (14) and the semi-finished part (16) by means of the spraying device (26) so as to generate a vacuum bag (34) having a varying thickness across its surface.

6. The method according to any one of Claims 1 to 5,
wherein, prior to spraying the sprayable material onto the tool (14) and the semi-finished part (16) by means of the spraying device (26), at least the semi-finished part (16) is covered by at least one of a peel ply (40), a perforated release foil (42) and a gating fabric tape (44).

7. The method according to any one of Claims 1 to 6,
wherein at least one of the semi-finished part (16) and the tool (14) is supported in its position by means of a retaining means (46) arranged outside of the vacuum bag (34) generated from the sprayable material.

8. An arrangement (10) for manufacturing a composite material component, the arrangement (10) comprising:
- a tool (12) adapted to receive a semi-finished part (16), and
- a spraying device (26) adapted to spray a sprayable material onto the tool (14) and the semi-finished part (16) so as to generate a vacuum bag (34) from the sprayable material which is configured to seal a receiving space (22) for receiving at least the semi-finished part (16) against the ambient atmosphere.

9. The arrangement according to Claim 8,
wherein the sprayable material is a polymer material which is adapted to be dried or cured after being sprayed onto the tool (14) and the semi-finished part (16) by means of the spraying device (26),.

10. The arrangement according to Claim 9,
wherein the sprayable material, after being dried or cured, is airtight up to a temperature of approximately 200°C and up to a pressure of approximately 12 bar.

11. The arrangement according to any one of Claims 8 to 10,
wherein the spraying device (26) is adapted to spray the sprayable material onto the tool (14) and the semi-finished part (16) so as to generate a vacuum bag (34) which defines a receiving space (36) enveloping the tool (14) and the semi-finished part (16) and/or wherein the spraying device (26) is adapted to spray the sprayable material onto the tool (14) and the semi-finished part (16) so as to generate a vacuum bag (34) which, together with the tool (14), in particular a supporting surface (18) of the tool (14), defines the receiving space (36), and which is connected to the tool (14), in particular the supporting surface (18) of the tool (14), in a sealing manner.

12. The arrangement according to any one of Claims 8 to 11,
wherein the spraying device (26) is adapted to spray the sprayable material onto the tool (14) and the semi-finished part (16) so as to generate a vacuum bag (34) having a uniform thickness across its surface, and/or wherein the spraying device (26) is adapted to spray the sprayable material onto the tool (14) and the semi-finished part (16) so as to generate a vacuum bag (34) having a varying thickness across its surface.

13. The arrangement according to any one of Claims 8 to 12,
further comprising at least one of a peel ply (40), a perforated release foil (42) and a gating fabric tape (44) which are adapted to cover at least the semi-finished part (16) prior to spraying the sprayable material onto the tool (14) and the semi-finished part (16) by means of the spraying device (26).

14. The arrangement according to any one of Claims 8 to 13,
further comprising a retaining means (46) adapted support at least one of the semi-finished part (16) and the tool (14) in its position, the retaining means (46) being arranged outside of the vacuum bag (34) generated from the sprayable material.

15. Use of a method according to any one of claims 1 to 7 or an arrangement according to any one of Claims 8 to 14 for producing a composite material aircraft component.
